(19) Europäisches Patentamt
European Patent Office
Office européen des brevets

(11) Veröffentlichungsnummer: **0 254 184 B1**

(12) **EUROPÄISCHE PATENTSCHRIFT**

(45) Veröffentlichungstag der Patentschrift: **13.03.91**

(51) Int. Cl.[5]: **C08F 220/30**, C08F 212/00, G11B 7/24

(21) Anmeldenummer: **87110145.7**

(22) Anmeldetag: **14.07.87**

(54) **Verwendung von härtbaren Reaktionsmassen zur Herstellung von Datenträgern.**

(30) Priorität: **25.07.86 DE 3625169**

(43) Veröffentlichungstag der Anmeldung: **27.01.88 Patentblatt 88/04**

(45) Bekanntmachung des Hinweises auf die Patenterteilung: **13.03.91 Patentblatt 91/11**

(84) Benannte Vertragsstaaten: **AT DE ES FR GB IT NL**

(56) Entgegenhaltungen:

**PATENT ABSTRACTS OF JAPAN, Band 7, Nr. 30 (P-173)[1175], 05 Februar 1983**

(73) Patentinhaber: **BAYER AG**

**W-5090 Leverkusen 1 Bayerwerk(DE)**

(72) Erfinder: **Klöker, Werner, Prof. Dr.**
**Deswatinesstr. 26**
**W-4150 Krefeld(DE)**
Erfinder: **Freitag, Dieter, Dr.**
**Hasenheide 10**
**W-4150 Krefeld(DE)**
Erfinder: **Uerdingen, Walter, Dr.**
**Humperdinckstr. 41**
**W-5090 Leverkusen(DE)**
Erfinder: **Hess, Bernhard, Dr.**
**Kaldenhausener Str. 84**
**W-4130 Moers 2(DE)**
Erfinder: **Schmid, Helmut, Dr.**
**Wedelstr. 69**
**W-4150 Krefeld(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

**Beschreibung**

Als Trägermaterial für Schichten mit magnetisch les- und beschreibbaren Audio-, Video- und EDV-Informationen sind in Form von Bändern, Folien und Platten Thermoplasten, wie gesättigte Polyester, z. B. Polyethylenterephthalat oder dessen Cokondensate, z. B. mit Butandiol-1,4, Polyvinylchlorid und Vinylchloridcopolymerisate, u. a. bewährte Materialien des Standes der Technik.

Für optisch, vor allem mittels Laser lesbare Systeme werden z. Z. nur Platten als Speichermedien eingesetzt. Bei den Video-(Laser-Vision)-Platten (Durchmesser ca. 30 cm) wird als Trägersubstrat Glas oder Polymethylmethacrylat angewandt.

Von Interesse und beschrieben sind als Substratmaterialien für optische Datenträger Polyvinylchlorid und Polycarbonat (van den Bruck und andere, Journal of Radiation Curing, Januar 1984, Seite 2 ff; Kunststoffjournal 11/1982, S. 6 ff, Kennziffer 2).

Als Materialien für die Datenspeicherung sind weiterhin beschrieben Butylmethacrylat/Methacrylsäure-Copolymerisate (Forestry Ministerium-Paper, SU 1046736 vom 03.06.82/ 07.10.83;

Terpolymerisate aus Alkylmethacrylat, Styrol und N-Vinylphenyl-n-alkyl-oder Arylthio-Harnstoff, Kish University, SU 873 269 vom 30.11.79/15.10.81; thermoplastische Massen, die Poly-N-vinylcarbazol, Trinitrofluorenon, Styrol-Butadien-Copolymerisate enthalten (M. S. Burakina, SU 667 950 vom 05.09.77/25.06.79);

Polymerisate auf Basis Cyclohexylmethacrylat, JP-A 57186241 vom 11.05.81/16.11.82.

Copolymerisate aus Butylmethacrylat und Styrol für die Datenschichten, die aus einer benzolischen Lösung, z. B. auf metallische Oberflächen aufgebracht werden (C. V. Gurasch und andere, SU 391 597 vom 26.04.71/22.11.73);
in diesem Zusammenhang ist auch noch die DE-OS 2 744 479 zu nennen, wonach die Datenträgerschicht durch Strahlenpolymerisation von z. B. 2-Ethylhexylacrylat, 1,1,1-Trimethylolpropantriacrylat auf Träger, z. B. Folien aus Polyvinylchlorid, Polycarbonat, Polyester, Celluloseester usw., aufgebracht wird.

Polymere sind als Substrate für Speicherplatten derzeit bei mehreren Technologien wirtschaftlich von Bedeutung und Interesse:

1. Nicht löschbare optische Speicher (R ead O nly M emory, ROM) oder Optical - Read - Only Memory (OROM)

1.1 Bei der Herstellung werden durch eine Form digitale Informationen, z. B. in Form von Pits, eingeprägt, die optisch, z. B. mittels Laser, nur zu lesen sind. Dieses Verfahren hat im Audio- und Videobereich mit den sogenannten Compact Discs (CD) und Laser-Vision eine große technische und wirtschaftliche Bedeutung erlangt. Derartige digitale Datenträger werden CD-ROMs genannt.

1.2 Bei den vom Benutzer "Einmal-beschreib- und -sofort-lesbaren-Systemen" (write-once -ROM oder Direct Read After Write, kurz DRAW genannt) wird eine transparente Substratplatte (aus Glas oder Polymermaterial) z. B. mit einer Thermoplastenschicht, mit Farbstoffen oder mit einer leicht schmelzenden Legierung, z. B. auf Basis Selen, Tellur, Bismut oder ähnlichem oder organischen Metallkomplex-Verbindungen, beschichtet und mittels Laser Informations-Spots (Löcher, Blasen, Vertiefungen) durch lokales Schmelzen und Schrumpfen der Schicht erzeugt, die wiederum durch unterschiedliche Reflexion oder Streuung Laser-lesbar sind.

2. "Vielfach-beschreib- und -danach-sofort-lesbare-Systeme" (Erasable Direct Read After Write, kurz E-DRAW oder O(optical)-E-DRAW genannt) bestehend aus einer Polymer- oder Glasplatte, die mit einer dünnen (z.B. $< 10\ \mu m$ dicken) Informationen speichernden Schicht versehen wird. Diese kann bestehen aus:

2.1 Substanzen, die eine Phasenänderung (P hase C hange) bei lokaler starker Laser-Einstrahlung zeigen. Solche Substanzen sind u. a. Selen-, Tellur-, Antimon-, Arsen-Verbindungen. Die durch Laser-Einwirkung erzeugte Information ist wiederum infolge unterschiedlichen Reflexionsverhaltens Laser-lesbar. Diese Systeme werden kurz "PC-E-DRAW-Systeme" genannt.

2.2 Ferromagnetische Legierungen mit einem niedrigen Curie-Punkt, z. B. solche aus der Serie Seltene Erden/Übergangsmetalle, wie Tb-Gd-Fe. Zum "Aus-Lesen" wird die Drehung der Schwingungsrichtung der linear polarisierten Laser-Strahlung genutzt (Kerr-und/oder Faraday-Effekt).

Beim "Beschreiben der Platte" wird durch einen starken Laser-Impuls bei gleichzeitigem Einwirken eines Magnetfeldes die Magnetisierung der Speicherschicht umgekehrt und nach Abkühlung unter die Curie-Temperatur eine Information magnetisch fixiert. Dieses System bzw. Verfahren wird kurz m agnetoo ptisches (MO-E-DRAW) System genannt.

Laser-lesbare ca. 1,2 mm dicke Audioplatten (compact discs, CD-ROMs) werden als Kopien derzeit nach dem "normalen" Spritzgießverfahren und nach dem Spritzprägeverfahren aus leicht fließendem Polycarbonat hergestellt (H. Löser, Kunststoffjournal 6/1985, S. 26 ff; Plastverarbeiter 36. Jahrgang, 1985, Nr. 3, S. 10 ff.) Dabei werden die digitalen Informationsträger in Form von 0,2 - 1 mm dicken Metallmatrizen

in der Spritzform fixiert.

Die beschriebenen Materialien und Verarbeitungsmethoden haben jedoch entscheidende Nachteile, die bei den steigenden Anforderungen von der Elektronikindustrie nicht mehr akzeptiert werden können:

1. Glas ist als Trägermaterial schwer, bruchempfindlich und die entsprechenden qualitativ hochwertigen Platten lassen sich nur schwierig und kostenaufwendig produzieren.
2. Platten, auch mit Informationen, lassen sich zwar einfach im Spritzguß aus Polymethylmethacrylat und Butylmethacrylat-Copolymerisaten fertigen; eine wesentliche Problematik ist jedoch die durch Wasseraufnahme (1,5 - 3 Gew.-%) hervorgerufene Quellung und die damit verbundenen Spannungen, der Verzug und die Änderung der Doppelbrechung. Bei der Laser-gelesenen Wiedergabe - nicht nur bei CD-ROMs -führt das zu schweren Störungen.
3. Nachteilig ist auch die geringe Wärmeformbestän digkeit und niedrige Glasübergangstemperatur von Polymethylmethacrylat (Tg: ca. 100 -110° C), Butylmethacrylatcopolymerisaten (Tg: <100° C) und vor allem vom PVC (Tg: ca. 80° C).
4. PVC hat weiter den Nachteil einer geringen Transmission, z. B. ca. 75 - 85 %, für die Wellenlänge des Lasers.
5. Weitere Nachteile der im One-Shot aus Thermoplasten hergestellten, mit Informationen (Pits) versehenen, Laser-lesbaren Datenplatten (CD-ROMs) für Audio, Video und EDV können sein: Schwierigkeiten bei Herstellung von Repliken durch ungünstige bis unvollständige Abformbarkeit der Informations-Pits, bedingt durch die relativ zähfließenden Schmelzen;
6. Problematik der Lebensdauer der Informations-Pits bei höheren Temperaturen (z. B. durch Einwirkung zu hoher Laser-Energie über zu lange Zeit, Temperaturbehandlung zum "Ausheizen" von Spannungen und ferner Abnutzungserscheinungen der Form durch Reibung der zähfließenden Thermoplastenschmelze während der Injektion bei hohen Temperaturen, z. B. 200 bis 360° C).

Basis des bisher beschriebenen Standes der Technik sind Glas oder thermoplastische Produkte. Die JP-A 59 - 22248 Sumitomo Bakelite Co., Ltd., vom 28.07.82/04.02.84 beansprucht transparente Trägermaterialien für optische Speicher, die aus einem flüssigen Epoxidharz in einer Form hergestellt werden und nachträglich mit einer Information-speichernden Schicht - nicht nur analog den oben beschriebenen DRAW und E-DRAW-Systemen, sondern auch bei CD-ROM-Kopien - versehen werden. Das mit Säureanhydrid und einem Härtungsbeschleuniger vom Imidazoltyp kombinierte, möglichst cycloaliphatische Expoxidharz muß in einer mit Trennmittel versehenen Form 5 Stunden bei 100° C härten. Derartig lange Formenbelegzeiten sind für eine Großserienfabrikation technisch und ökonomisch nicht akzeptabel.

Dem Fachmann ist bekannt, daß höher vernetzte Polymerisate eine größere Volumenkontraktion aufweisen als die meisten Polyadditionssysteme, vor allem als Epoxidharze. Diese Volumenkontraktion kann z. B. eine geringe Festigkeit, u. a. wegen höherer innerer Spannungen und daraus resultierend höherer Doppelbrechungen, bedingen. Wegen der relativ hohen Volumenkontraktion bei transparenten Systemen, die schon im relativ frühen Härtungsstadium auftreten kann, waren generell bei der Herstellung von Plattenkopien mit Informationen (CD-ROMs) keine guten Abformungen der Informations-Pits zu erwarten, insbesondere bei ungesättigten Polyester-, Acrylat- und Methacrylatsystemen.

Es wurde nun überraschenderweise gefunden, daß mit einer Auswahl von Reaktionsmassen auf Basis der genannten ungesättigten Verbindungen durch Härtung mit Peroxiden und gegebenenfalls Beschleunigern sowie gegebenenfalls Zusatzbeschleunigern und Inhibitoren und/oder Strahlung, bevorzugt UV-Strahlung, in Gegenwart von Initiatoren sich im Temperaturbereich zwischen 15 und 100° C in weniger als 20 Minuten die beschriebenen transparenten Substrat-und Kopieplatten (mit Informationen in Form von Pits (CD-ROMs)) in hoher Qualität herstellen und entformen lassen. Diese Polymerisationsprodukte zeichnen sich aus durch geringe bis sehr geringe Doppelbrechung (<20 nm/mm, vorzugsweise <5nm/mm bis <1nm/mm), geringe Wasseraufnahme (<0,9 vorzugsweise <0,5 Gew.-%), hohe mechanische Stabilität (Biege-E-Modul >2300 $N/mm^2$, vorzugsweise >3000 $N/mm^2$, insbesondere >3500 $N/mm^2$) und vor allem durch eine sehr gute Abformung der Informationsoberfläche bei einer hohen Wärmeformbeständigkeit (Tg >140° C, bevorzugt Tg >160° C). Diese Substrat- und Kopieplatten zeigen also die genannten Nachteile der beschriebenen Thermoplasten und des Epoxidharzsystems nicht oder in sehr stark reduziertem Maße. Das gilt im Vergleich zu dem Epoxidharzsystem insbesondere für die wegen langer Formenbelegzeiten langsame Produktionsgeschwindigkeit und die notwendige Anwendung hoher Temperaturen.

Die Reaktionsmassen gemäß der vorliegenden Erfindung bestehen aus

A.

30 bis 90 - vorzugsweise 40 bis 80 - Gew.-Tl. zweifach ethylenisch ungesättigter polymerisierbarer Verbindungen der Formel I - bevorzugt Bisphenol-A- und Bisphenol-F-bis-methacrylat, gegebenenfalls in Abmischung mit Verbindungen der Formel II,

B.

70 bis 10 - vorzugsweise 60 bis 20 - Gew.-Tl. copolymerisierbarer Verbindungen III aus der Reihe p-Methylstyrol, tert.-Butylstyrole, Divinylbenzole, Vinylnaphthaline, Vinylanthracene,
wobei sich die Summe von A und B auf 100 Gew.-Tl. ergänzt.

Zur Herstellung der Polymeren (Härtung) werden vorzugsweise Reaktionsmittel und gegebenenfalls -hilfsmittel eingesetzt:

C.
0,01 bis 10 - vorzugsweise 0,1 bis 4 - Gew.-Tl. mindestens eines Polymerisationsinitiators und gegebenenfalls

D.
0,00001 bis 0,5 - vorzugsweise 0,00002 bis 0,1 - Gew.-Tl. mindestens eines Beschleunigers und gegebenenfalls

E.
0,001 bis 2 - vorzugsweise 0,001 bis 1 - Gew.-Tl. mindestens eines Zusatzbeschleunigers (Promotors) und gegebenenfalls

F.
0,00001 bis 0,5 - vorzugsweise 0,0001 bis 0,01 - Gew.-Tl. mindestens eines Inhibitors.

Sofern für Komponente A neben Verbindung I auch Verbindung II eingesetzt wird, beträgt die Menge von I im allgemeinen mindestens 20, vorzugsweise mindestens 40 Gew.-% von II.

Verbindungen der

FORMEL I:

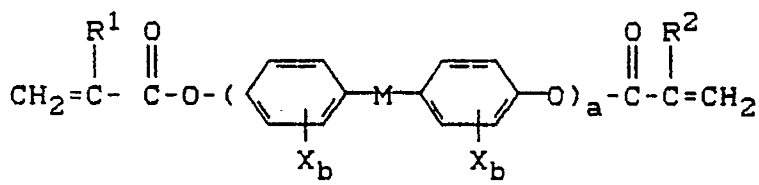

a = 1 - 2, bevorzugt 1,
b = 0 - 4, bevorzugt 0 - 2,

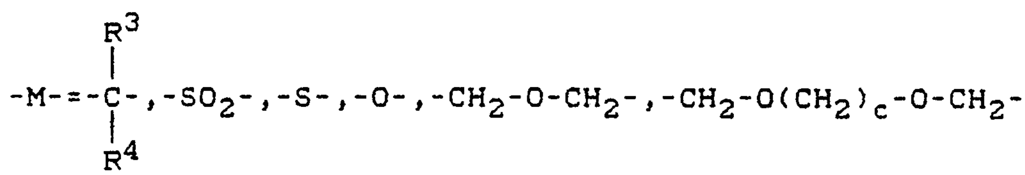

oder eine Einfachbindung,
c = 2 - 6,
X- = $-CH_3$, -Halogen(außer I),

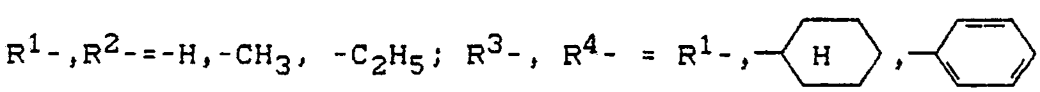

FORMEL II:

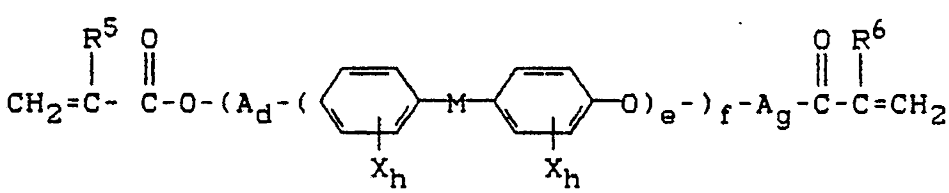

d = 1 - 3, bevorzugt 1 - 2,

e = 1 - 2, bevorzugt 1,
f = 1 - 5, bevorzugt 1, 3, 5,
g = 1 - 3, bevorzugt 1 - 2,
h = 0 - 4,
X - = $-CH_3$, -Halogen (außer I)

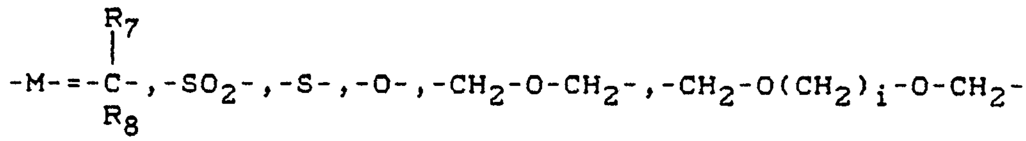

oder eine Einfachbindung mit der Maßgabe, daß im Falle f > 1 in Formel II M unterschiedlich sein kann,
i = 2 - 6,

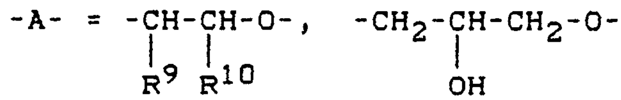

$R^5$-,$R^6$-,$R^9$-,$R^{10}$ = -H, $-CH_3$ mit der Maßgabe, daß $R^9$ und $R^{10}$ nicht gleichzeitig $-CH_3$ sind,

$$R^7-, R^8- = -H,\ -CH_3,\ -C_2H_5,$$

darüber hinaus

$R^8$ = 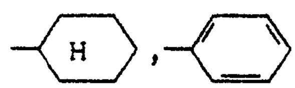

Bevorzugte Reaktionsmassen sind solche auf der Basis der

<u>FORMEL I</u>

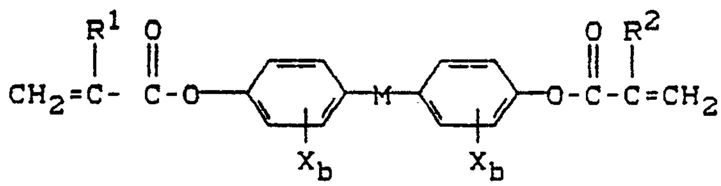

b = 0 - 2

-M- = 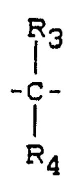

X- = $-CH_3$,-Cl

$R^1, R^2-, R^3-, R^4- = -H, -CH_3$

FORMEL II:

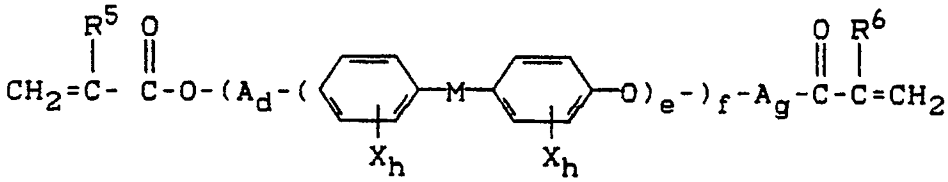

d = 1 - 2,
e = 1 - 2, bevorzugt 1,
f = 1, 3,
g = 1 - 2,
h = 0 - 2,

-M- = 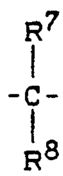

-A- = 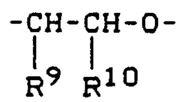, 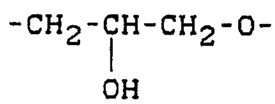

$R^5-, R^6-, R^7-, R^8, R^9-, R^{10}- = -H, -CH_3$

Besonders bevorzugte Reaktionsmassen sind solche auf der Basis der

FORMEL I:

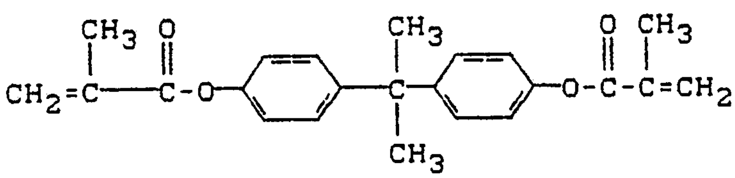

FORMEL II:

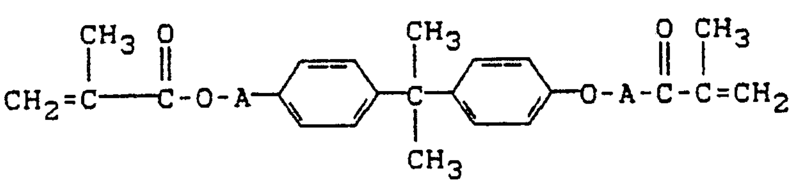

$-A- = -CH_2-CH_2-O-$

Die Herstellung der Polymerisate erfolgt in bekannter Weise durch Polymerisation bei möglichst niedrigen Temperaturen, vorzugsweise jedoch durch Strahlung, z. B. durch UV-Strahlung, vorzugsweise bei Raumtemperatur, höchstens jedoch bei 100° C. Gegebenenfalls kann die Restpolymerisation, vor allem bei Polymerisaten mit höheren Glasübergangstemperaturen, durch eine Wärmenachbehandlung (Temperung) oberhalb 50° C, jedoch maximal bei einer Temperatur von T = Tg + 20° C, vorzugsweise bei 80 - 100°

C erfolgen.

Verbindungen der Formel I im Sinne dieser Erfindung sind Acrylester und vorzugsweise Methacrylsäureester von Bisphenolen, z. B. Sulfonyl-bisphenyl, Thionyl-bisphenol, 4,4'-Dihydroxydiphenyl, 4,4'-Dihydroxydiphenylether, insbesondere Bisphenol A, Bisphenol F und deren Gemische.

Verbindungen im Sinne dieser Erfindung, die der Formel II entsprechen, sind Acrylester und vorzugsweise Methacrylester von Ethoxylierungs- und/oder Propoxylierungsprodukten von Bisphenolen, z. B. Sulfonyl-Bisphenol, Thionyl-Bisphenol, bevorzugt Bisphenol A und F oder deren Gemische, mit einem Eth- und/oder Propoxylierungsgrad von 1 - 3, bevorzugt 1 -2. Weiterhin entsprechen den Substanzen der Formel I Acrylate und vorzugsweise Methacrylate von Bisglycidylethern der genannten Bisphenole oder deren Gemische, bevorzugt von Bisphenol A und F, sowie die Reaktionsprodukte aus Bisphenol-bis-glycidylethern und gleichen und/oder unterschiedlichen Bisphenolen, Molverhältnis (2:1) bis (5:4), bevorzugt 2:1, bevorzugt Bisphenol -A und -F, und deren kernsubstituierten Derivaten wie Tetramethyl- und/oder Tetrachlorbisphenol-A und -F.

Die bei der technischen Herstellung der Verbindungen II als Nebenprodukte anfallenden Monoester sind für die erfindungsgemäße Verwendung im allgemeinen unschädlich.

Polymerisationsinitiatoren im Sinne dieser Erfindung sind

1. für die Strahlenhärtung, vorzugsweise mit UV-Strahlen: z. B. Benzophenon, 1-Hydroxycyclohexylphenylketon, 2-Methyl-1-4-(methylthio)phenyl-2-morpholinopropanon-1, Benzoin-ether, vorzugsweise Benzoinisopropyl-und -isobutyl-ether, Benzildiketale, vorzugsweise Benzildimethylketal, und Gemische der genannten Verbindungen;
2. für die radikalische Härtung mit organischen Peroxiden und/oder Silylethern des Benzpinakols und/oder Strahlungs/Peroxid-Mischhärtungen: Diacylperoxide, Peroxydicarbonate, Perester, Perketale, Dialkylperoxide, Ketonperoxide, Hydroperoxide, z. B.: Bis(2,4-dichlorbenzoyl)-peroxid, Dilauroylperoxid, Dibenzoylperoxid, Di-2-ethylhexylperoxydicarbonat, Diisopropylperoxydicarbonat, Dicyclohexyl-peroxydicarbonat, Bis-(4-tert.-butylcyclohexyl)-peroxydicarbonat, tert.-Butyl-perpivalat, tert.-Butyl-per-2-ethylhexanoat, tert.-Butyl-per-3,5,5-trimethylhexanoat, tert.-Butyl-perbenzoat, tert.-Butylpermaleinat, 1,1-Bis(tert.-butylperoxy)3,3,5-trimethylcyclohexan, 1,1-Bis(tert.-butylperoxy)-cyclohexan, 2,2-Bis(tert.-butylperoxy)butan, n-Butyl-4,4-bis(tert.-butylperoxy)valerat, Ethyl-3,3- bis-(tert.-butylperoxy)butyrat, Dicumylperoxid, tert.-Butylcumylperoxid, Bis(tert.-butylperoxyisopropyl)-benzol, 2,5-Dimethylhexan-2,5-di-tert.-butylperoxid, Di-tert.-butylperoxid, Methylisobutylketonperoxid, Methylethylketonperoxid, Acetylacetonperoxid, Cyclohexanonperoxid, Cumolhydroperoxid, t-Butylhydroperoxid und Gemische der genannten Verbindungen.

Beschleuniger im Sinne dieser Erfindung sind in den Reaktionsmassen lösliche anorganische, vorzugsweise organische Salze sowie Komplexverbindungen von Metallen, vorzugsweise von Cobalt und Vanadin, z. B. Cobalt-octoat, -naphthenat, -acetylacetonat, Vanadylacetylacetonat, Vanadylsalze von partiellen Phosphorsäureestern, Pyro- oder Polyphosphorsäureestern, Vanadyloctoat, Vanadylacetat, Vanadyl-p-toluolsulfonat; ferner Amine, vorzugsweise tertiäre Alkylarylamine, z. B. N,N-Dimethylanilin, N,N-Diethylanilin, N,N-Dimethyl-p-toluidin, N,N-Bis-($\beta$-hydroxyethyl)p-toluidin, N,N-Bis-($\beta$-hydroxypropyl)p-toluidin, N,N-Bis-($\beta$-hydroxyethyl)-p-toluidin-phthalat, N,N-Bis-($\beta$-hydroxypropyl)-p-toluidinadipat (gemäß DE-OS 19 43 954), tert. Amin der Formel I nach DE-OS 32 02 090, worin $R_3$, $R_5$ = -H und $R_4$ = $-CH_3$ sind (p-Toluidin-Derivat), tert. Amin der Formel 1 nach DE-OS 32 02 090, worin $R_4$ und $R_5$ Methylgruppen sind (Xylidin-Derivat), tert. Arylamin-Typ in Gemisch mit N,N-Bis-($\beta$-hydroxyethyl)-m-chloranilin (Verhältnis 1 : 1 bis 6 : 1).

Zusatzbeschleuniger (Promotoren) im Sinne dieser Erfindung sind für Härtungen mit Beschleunigern auf Basis von Cobalt-Verbindungen die oben genannten Amine, vorzugsweise N,N-Dimethylanilin, N,N-Diethylanilin, N,N-Dimethyl-p-toluidin, N,N-Bis-$\beta$-hydroxyethyl- und/oder -propyl-p-toluidin und/oder deren Ester, z. B. mit Adipinsäure, Phthalsäuren, Monocarbonsäuren ($C_2$-$C_{10}$).

Zusatzbeschleuniger für Vanadinverbindungen sind: Thiole und Thiocarbonsäureester, vorzugsweise Thioglykolsäureester, wie z.B. in der DE-AS 2 025 410 beschrieben.

Inhibitoren im Sinne dieser Erfindung sind: Benzochinon, Toluchinon, Naphthochinone, Trimethylbenzochinon, Mono-und Di-tertiär-butylbenzochinone und/oder deren Hydrochinone, vorzugsweise Hydrochinon, Toluhydrochinon, 1,4-Napthohydrochinon, Brenzcatechine - vorzugsweise Mono-und/oder Di-tert.-butylbrenzcatechine - sowie deren Mono-alkylether, ferner Chloranil und lösliche Kupfersalze und/oder -Komplexe, z. B. Kupfer-naphthenat, -octoat, -acetylacetonat, Kupfer(I)chlorid-Phosphit-Kompexe, sowie Gemische der genannten Verbindungen.

Die Reaktionsmassen können - abhängig von Art und Menge der Komponenten - bei Temperaturen von 10 bis 100, vorzugsweise 20 bis 90° C gehärtet werden.

Datenträger - Trägermaterialien sind solche, die entweder

I. die Information beinhalten (z.B. in Pits) oder

II. die Information in Form sensibler Stoffe (z.B. Farbstoffe) eingebettet enthalten oder
III. durch eine Informationsschicht (wie sie z.B. Selen-Tellur-Verbindungen und -Legierungen sowie Legierungen und Verbindungen mit tiefem Curie-Punkt darstellen) bedeckt sind.

Die Trägermaterialien können selbsttragend oder nicht selbsttragend sein, wobei es sich bei nicht selbsttragenden Materialien vornehmlich um Zwischenschichten (z.B. auf Glas, Thermoplasten oder Duroplasten) handelt.

Beispiele

Allgemeine Herstellungs- und Prüfbedingungen

1. Formbau

2 Silikat-(Fenster-)Glasscheiben (200 mm x 270 mm x 3 mm) werden mit einem ca. 4 mm (runder Querschnitt) oder 1 mm (rechteckiger Querschnitt) dicken Weich-PVC-Dichtungsband an den 2 langen und einer kurzen Seite der Scheiben auf Abstand gehalten. An diesen Seiten wird die Kombination mittels drei Federstahlklammern (eckiger, U-förmiger Querschnitt, Länge der Klammern: ca. 210 mm) fixiert.

2. Trennmittel

Sojalecithin, 5 %ig in Xylol

3. Härtung

3.1 Temperatur: im allgemeinen Raumtemperatur (23° C), falls nicht anders angegeben.
3.2 Härtungsmethode: Kontinuierliche oder Intervall-Bestrahlung in Gegenwart von UV-Initiatoren und/oder, falls vermerkt, organischer Peroxide, und Beschleuniger und gegebenenfalls Zusatzbeschleuniger und gegebenenfalls Inhibitoren; senkrecht stehende Form.
3.3 Strahlungsquelle: 4 Leuchtstoffröhren vom Typ TKL 40 W/09, Philips.
3.4 Abstand der Leuchtstoffröhren von der Form: ca. 4,5 cm
3.5 Wärmebehandlung: im allgemeinen über Nacht bei 90° C; Abkühlung im Wärmeschrank auf ca. 30° C; danach Entformung (falls nicht anders angegeben).

4. Doppelbrechung bzw. spezifischer Gangunterschied im linear polarisierten Licht

| | |
|---|---|
| Plattendicke: | 0,1 cm |
| Meßgerät: | Polarisationsmikroskop |
| Meßrichtung: | $M_1$, d.h. der Meßstrahl verläuft nur senkrecht durch die Gießplatte (senkrecht zur Gießrichtung) |
| Opt. Aussehen: | Zwischen zwei um 90 Grad gedrehten Polarisationsfolien |

5. Wasseraufnahme

nach ISO/R62, DIN 53 495; Plattendicke; 0,1 cm; nach 50 Tagen (falls nicht anders angegeben)

6. Glasübergangstemperatur (Tg)

6.1 Dynamische Glasübergangstemperatur (dyn. Tg) nach DIN 53 455: Prüfkörper: Flachstab (60 mm x 10 mm x 1 mm).
6.2 Glasübergangstemperatur nach Differentialthermoanalyse (Tg n. DTA)

Legende zu den Beispielen

| | |
|---|---|
| B-A-BMA | = Bisphenol-A-bis-methacrylat |
| HEB-A-BMA | = (4,4-Bis($\beta$-hydroxyethyl)-bisphenol-A)-bismethacrylat |

| Beispiel | Zusammensetzung $M_1$ [in Molen] | Doppelbrechung [nm/mm] | Wasseraufnahme [Gew.-%] | Tg. [°C] | Biege-E-Modul [N/mm²] |
|---|---|---|---|---|---|
| 1 | B-A-BMA<br>HEB-A-BMA<br>p-Methylstyrol<br>1 : 1 : 3 | 3 | 0,42 | 194 (dyn.) | 3350 |
| 2 | B-A-BMA<br>HEB-A-BMA<br>Divinylbenzol<br>0,5 : 0,8 : 3 | 1 | 0,25 | 169 (DTA) | 3200 |
| 3 | B-A-BMA<br>HEB-A-BMA<br>tert.-Butylstyrol<br>0,5 : 0,8 : 3 | 0 | 0,30 | 175 (dyn.) | 3068 |
| 4 | B-A-BMA<br>HEB-A-BMA<br>tert.-Butylstyrol<br>Divinylbenzol<br>0,5 : 0,8 : 2 : 1 | 0 | 0,28 | 175 (dyn.) | 3040 |

Beispiele 1 - 4

Initiator:
0,3 Gew.-% Benzildimethylketal, bezogen auf Reaktionsmasse

**Ansprüche**

**1.** Verwendung von härtbaren Reaktionsmassen enthaltend

A. 30 bis 90 Gewichtsteile polymersierbarer Verbindungen der Formel

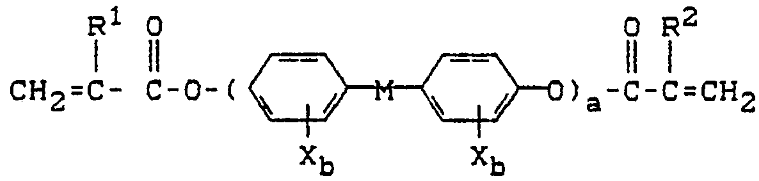

(I)

worin

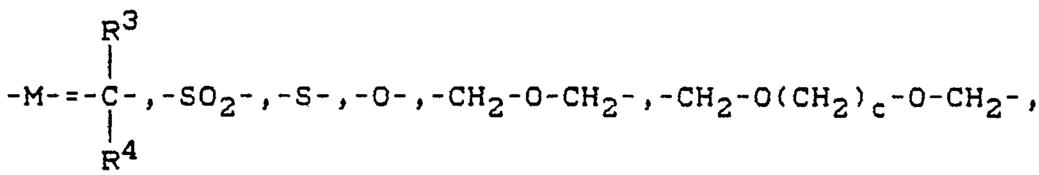

Einfachbindung

X - = $-CH_3$, -Halogen(außer I)

$R^1$-,$R^2$- = -H,$-CH_3$, $-C_2H_5$;

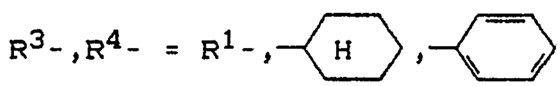

a = 1 - 2, bevorzugt 1

b = 0 - 4, bevorzugt 0 - 2

c = 2 - 6

bedeuten,

und gegebenenfalls der Formel

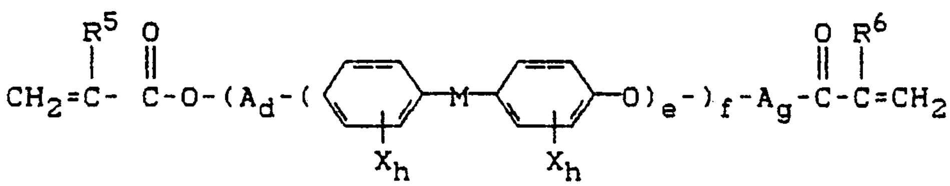

(II)

worin X - = $-CH_3$, -Halogen (außer I)

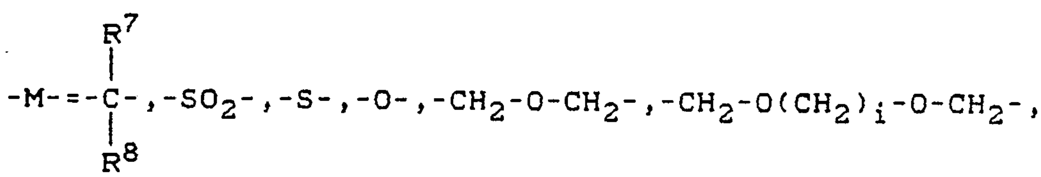

Einfachbindung

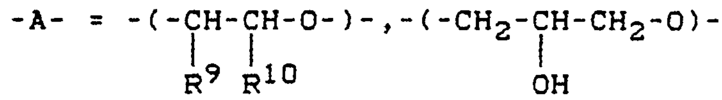

$R^5$-,$R^6$-,$R^9$-,$R^{10}$ = -H, $-CH_3$ mit der Maßgabe, daß $R^9$ und $R^{10}$ nicht gleichzeitig $CH_3$ sind
$R^7$-, $R^8$- = $R^5$-,$-C_2H_5$,
darüber hinaus

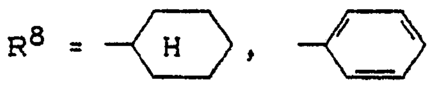

d = 1 - 3,
e = 1 - 2, bevorzugt 1
f = 1 - 5, bevorzugt 1, 3, 5
g = 1 - 3, bevorzugt 1 - 2
h = 0 - 4
i = 2 - 6
bedeuten, und

B. 70 bis 10 Gewichtsteilen copolymerisierbarer Verbindungen III aus der Reihe p-Methylstyrol, tert.-Butylstyrole, Divinylbenzole, Vinylnaphthaline, Vinylanthracene,
wobei sich die Summe der Komponenten A und B auf 100 Gewichtsteile ergänzt,
zur Herstellung von Trägermaterialien für optisch und/oder magnetisch les- und/oder beschreibbare Datenträger.

**2.** Verwendung nach Anspruch 1, dadurch gekennzeichnet, daß die Reaktionsmassen 40 bis 80 Gew.-Teile A und 60 bis 20 Gew.-Teile B enthalten, wobei sich die Summe A + B auf 100 Gew.-Teile ergänzt.

## Claims

**1.** The use of curable reaction masses containing
A. from 30 to 90 parts by weight of polymerisable compounds corresponding to the following formula

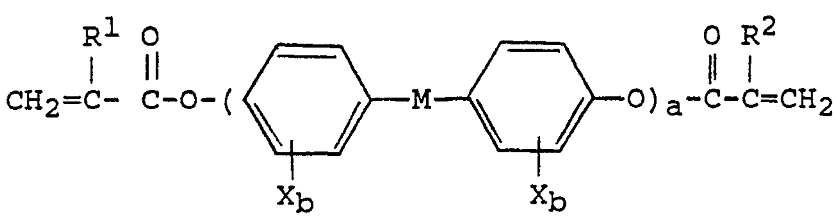
(I)

wherein

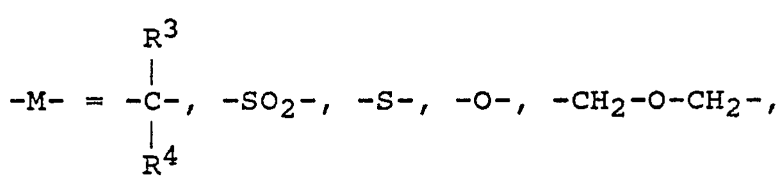

$-CH_2-O(CH_2)_c-O-CH_2-$,

or a single bond,
X = $CH_3$, halogen (with the exclusion of I), $R^1$- and $R^2$ = -H, $-CH_3$, $-C_2H_5$;

$R^3$-, $R^4$- = 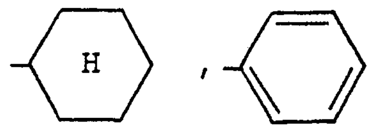

a = 1 - 2, preferably 1,
b = 0 - 4, preferably 0 - 2 and
c = 2 - 6
and optionally corresponding to the following formula

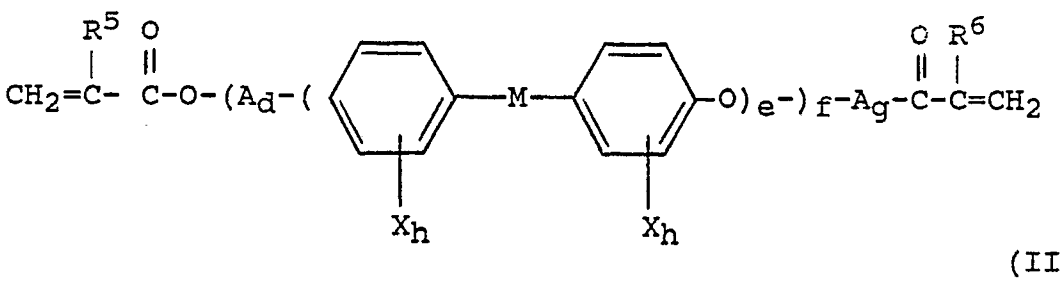

(II)

wherein
X = $CH_3$ or halogen (with the exclusion of I),

M = 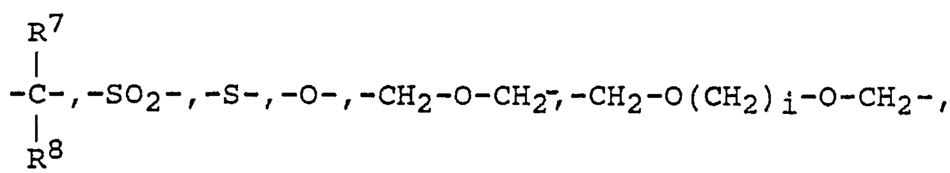

or a single bond,

A = 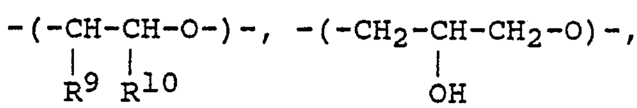

$R^5$, $R^6$, $R^9$ and $R^{10}$ = H or $CH_3$ under the condition that $R^9$ and $R^{10}$ are not both $CH_3$,
$R^7$ and $R^8$ = $R^5$ or $C_2H_5$ or

$R^8$ = 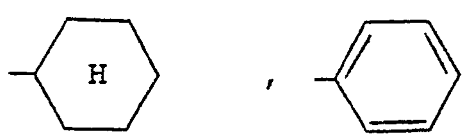

d = 1 - 3,
e = 1 - 2, preferably 1,
f = 1 - 5, preferably 1, 3 or 5,
g = 1 - 3, preferably 1 - 2,
h = 0 - 4 and
i = 2 - 6,
and

B. from 70 to 10 parts by weight of copolymerisable compounds III from the series comprising p-methylstyrene, tert.-butylstyrenes, divinylbenzenes, vinyl naphthalenes and vinyl anthracenes, the sum of components A and B adding up to 100 parts by weight for the preparation of carrier materials for optical and/or magnetic data carriers usable for reading and/or writing.

**2.** Use according to Claim 1, characterised in that the reaction masses contain from 40 to 80 parts by weight of A and from 60 to 20 parts by weight of B, the sum of A + B amounting to 100 parts by weight.

## Revendications

**1.** Utilisation de mélanges réactifs durcissables contenant

A. 30 à 90 parties en poids de composés polymérisables de formule

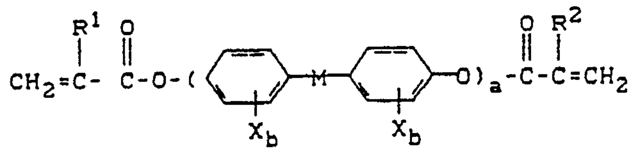
(I)

dans laquelle

-M- représente 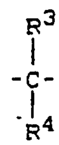, $-SO_2-$, -S-, -O-, $-CH_2-O-CH_2-$, $-CH_2-O(CH_2)_c-O-CH_2-$,

une liaison simple,

X - représente un radical $-CH_3$, -halogéno (excepté I)

$R^1$-, $R^2$- représentent -H, $-CH_3$, $-C_2H_5$ $R^3$-, $R^4$- représentent $R^1$-,

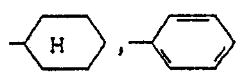

a = 1 - 2, de préférence 1

b = 0 - 4, de préférence 0 - 2

c = 2 - 6

et le cas échéant de formule

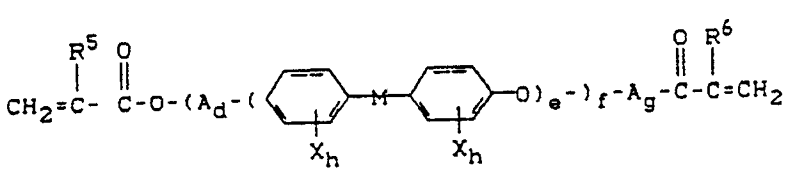
(II)

dans laquelle

X - représente un radical $-CH_3$, -halogéno (excepté I) -M- représente

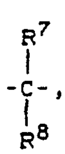, $-SO_2-$, -S-, -O-, $-CH_2-O-CH_2-$, $-CH_2-O(CH_2)_i-O-CH_2-$,

une liaison simple,

-A- représente 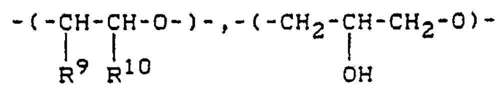

$R^5$-, $R^6$-, $R^9$-, $R^{10}$- représentent -H, $-CH_3$ sous réserve que $R^9$ et $R^{10}$ ne représentent pas simultanément $CH_3$ $R^7$-, $R^8$- représentent $R^5$-, $-C_2H_5$,
en outre, $R^8$ représente

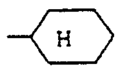 , 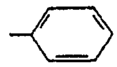

d = 1 - 3,
e = 1 - 2, de préférence 1
f = 1 - 5, de préférence 1, 3, 5
g = 1 - 3, de préférence 1 - 2
h = 0 - 4
i = 2 - 6
et

B. 70 à 10 parties en poids de composés copolymérisables III de la série du pméthylstyrène, des tertiobutylstyrènes, des divinylbenzènes, des vinylnaphtalènes, des vinylanthracènes, la somme des composants A et B se complétant à 100 parties en poids, pour la production de substrats pour supports d'informations à lecture et/ou écriture optiques et/ou magnétiques.

2. Utilisation suivant la revendication 1, caractérisée en ce que les mélanges réactifs contiennent 40 à 80 parties en poids de A et 60 à 20 parties en poids de B, la somme A + B se complétant à 100 parties en poids.